Europäisches Patentamt

European Patent Office

Office européen des brevets

(19)

(11) **EP 0 734 768 B1**

(12) **EUROPÄISCHE PATENTSCHRIFT**

(45) Veröffentlichungstag und Bekanntmachung des Hinweises auf die Patenterteilung:
**28.08.2002 Patentblatt 2002/35**

(51) Int Cl.$^7$: **B01L 3/14**, G01N 33/543

(21) Anmeldenummer: **96104920.2**

(22) Anmeldetag: **28.03.1996**

(54) **Verfahren zur Bindung eines biologischen Materials**

Method of binding a biological substance

Procédé de fixation d'une substance biologique

(84) Benannte Vertragsstaaten:
**CH DE ES FR GB IT LI NL**

(30) Priorität: **01.04.1995 DE 29505652 U**
**01.04.1995 DE 19512360**

(43) Veröffentlichungstag der Anmeldung:
**02.10.1996 Patentblatt 1996/40**

(73) Patentinhaber: **Roche Diagnostics GmbH**
**68298 Mannheim (DE)**

(72) Erfinder:
• **Bienhaus, Gerhard, Dr.**
**82407 Wielenbach (DE)**

• **Fritz, Michael**
**68647 Biblis (DE)**
• **Schwab, Jürgen**
**68775 Ketsch (DE)**
• **Geisler, Edda**
**68199 Mannheim (DE)**
• **Harttig, Herbert, Dr.**
**67122 Altrip (DE)**
• **Macho, Heinz**
**64658 Fürth (DE)**

(56) Entgegenhaltungen:
**EP-A- 0 294 645**     **EP-A- 0 378 353**
**EP-A- 0 508 010**     **US-A- 4 083 788**
**US-A- 5 124 041**

**Beschreibung**

Gegenstand der vorliegenden Erfindung ist ein Verfahren zur Bindung eines biologischen Materials an eine Festphase sowie ein hierfür geeigneter Formkörper, der eine poröse Matrix und Bauteile zur Verbindung mit weiteren Funktionsteilen aufweist.

In vielen Anwendungsgebieten erfordert die Behandlung von Flüssigkeiten besondere Sorgfalt im Hinblick auf eine aktive Vermeidung der Entstehung von Kontaminationen, die einen schädlichen Einfluß auf die Umgebung ausüben könnten. Dies gilt insbesondere für giftige Flüssigkeiten, jedoch auch für üblicherweise während Analysen von Inhaltsstoffen anfallende Flüssigkeiten. In der Regel werden nämlich Behandlungsschritte zur Vorbereitung einer Probenflüssigkeit für die Analyse in demselben Labor oder sogar Raum vorgenommen, wie die Analyse selbst. Zum Beispiel durch während der Behandlung entstehende Aerosole wird die Umgebung oft so stark z. B. mit Probenbestandteilen kontaminiert, daß die Analyse von Inhaltsstoffen anderer Proben dadurch verfälscht wird. Ein falsches Analyseergebnis kann insbesondere bei der Analyse von Inhaltsstoffen in der medizinischen bzw. klinischen Diagnostik für den Patienten schreckliche Folgen haben.

Analysen, die auf dem Nachweis von Nukleinsäuren in einer Probe beruhen, wurden in jüngerer Zeit wegen ihrer relativ hohen erreichbaren Spezifität als Diagnosehilfsmittel angeführt. Diese Tests stellen jedoch wegen des üblicherweise geringen Gehalts an Nukleinsäuren und insbesondere der nachzuweisenden Nukleinsäuren bei gleichzeitiger Anwesenheit von Nukleinsäuren ähnlicher Sequenz sowie anderer Inhaltsstoffe, die Nukleinsäurebestimmungen empfindlich stören können, eine erhebliche technische Herausforderung dar. Es hat sich herausgestellt, daß die in letzter Zeit immer populärer werdenden Amplifikationsverfahren, mit denen in einer Reaktion, abhängig von der Anwesenheit einer ganz bestimmten, nachzuweisenden Nukleinsäuresequenz eine Vielzahl identischer Nukleinsäuren hergestellt werden können, die Empfindlichkeit der Tests wesentlich verbessern können, so daß manchmal sogar einzelne Nukleinsäuren nachgewiesen werden können. Die hohe erreichbare Empfindlichkeit der Nachweise hat jedoch auch zur Folge, daß Kontaminationen (Verunreinigungen) von anderen Proben mit selbst nur einer einzigen Nukleinsäure aus der Umgebung zu einem positiven Analyseergebnis führen kann und so ein positives Analyse ergebnis vorgetäuscht wird. Aus diesem Grund muß für Nukleinsäuretests eine besonders effektive Vermeidung bereits der Entstehung von Kontaminationen, d. h. der Austritt von Nukleinsäuren aus einer Probe oder einem Reaktionsgemisch in die Umgebung, betrieben werden.

Bei der Vorbereitung von Proben zur Analyse von Inhaltsstoffen, insbesondere Nukleinsäuren, werden in jüngerer Zeit in vermehrten Umfang Verfahren eingesetzt, bei denen die Probenflüssigkeit und darin enthaltene oder daraus isolierte Inhaltsstoffe in einem Gefäß einer Behandlung unterzogen werden, bei der eine Flüssigkeit durch eine Einlaßöffnung in das Gefäß eingebracht wird und die Flüssigkeit nach einem oder mehreren Behandlungsschritten durch eine Auslaßöffnung aus dem Gefäß entfernt wird. Solche Gefäße sind auf dem Markt in Form von Säulen erhältlich, die beispielsweise Materialien zur Abtrennung von Inhaltsstoffen aus der Flüssigkeit enthalten, wie der QIAamp Kit der Firma Qiagen. Diese Gefäße befinden sich in einem Gefäß, so daß eventuell austretende Flüssigkeit in dieses Gefäß austritt und nicht in die Umgebung. Diese Art der Behandlung von Flüssigkeiten ist jedoch aufwendig und benötigt ein entsprechendes zweites Gefäß. Darüber hinaus werden diese Gefäße in Zentrifugen eingesetzt, um die Flüssigkeit in das zweite Gefäß zu schleudern.

In EP-A-0 378 353 und EP-A-0 508 010 werden Vorrichtungen zur Aufnahme biologischer Flüssigkeiten beschrieben, die auch die Bindung von bestimmten Analyten aus der Probenflüssigkeit an eine in der Vorrichtung vorhandene Matrix beschreiben. Wie bei der vorliegenden Erfindung wird hierbei die Probenflüssigkeit durch Einführen eines hohlen, flüssigkeitsdicht abschließenden Formkörpers in das Probengefäß aus diesem durch die im hohlen Formkörper eingebrachte Matrix in den Innenraum des Formkörpers gedrückt und erlaubt eine Bindung der Analyten an die Matrix. Im Gegensatz zu dem erfindungsgemäßen Verfahren erfolgt die Abtrennung der durch die Matrix gedrückten Probenflüssigkeit in dem in EP-A-0 378 353 und EP-A-0 508 010 beschriebenen Verfahren durch Abschrauben des Teils des hohlen Formkörpers, der die Probenflüssigkeit enthält.

In EP-A-0 294 645 wird ein Filtrationsverfahren für Urinproben beschrieben, bei dem ähnlich dem erfindungsgemäßen Verfahren die Probenflüssigkeit durch Einführen eines hohlen, flüssigkeitsdicht abschließenden Formkörpers in das Probengefäß die Probenflüssigkeit durch eine Matrix in den Innenraum des Formkörpers gedrückt wird. Die Bindung von Stoffen aus der Probenflüssigkeit an die Matrix wird in EP-A-0 294 645 nicht beschrieben.

Aufgabe der vorliegenden Erfindung war, es die derzeit bekannten Verfahren zur Bindung eines biologischen Materials an eine Festphase im Hinblick auf im Stand der Technik bekannte Nachteile teilweise oder vollständig zu verbessern.

Gegenstand der Erfindung ist ein Verfahren zur Bindung eines biologischen Materials an eine Festphase durch Bereitstellung einer das biologische Material enthaltenden Probenflüssigkeit in einem Probengefäß mit einer inneren Kontur und Einbringen eines gegen das Probengefäß mit einer porösen Matrix verschlossenen, eine auf die innere Kontur abgestimmte äußere Kontur aufweisenden und hohlen Formkörper in das Probengefäß, so daß Probenflüssigkeit durch die poröse Matrix in den Formkörper eindringt.

Außerdem ist Gegenstand der Erfindung ein hohler Formkörper, enthaltend eine zur Bindung eines biologischen Materials fähige poröse Matrix und Bauelemente zur Befestigung eines Deckels und eines den Formkörper zumindest teilweise umfassenden Gefäßes.

Biologisches Material im Sinne der Erfindung kann jedes biologische Material sein. Insbesondere handelt es sich um Inhaltsstoffe von Proben, wie sie in der medizinischen bzw. klinischen Diagnostik oder in der Molekularbiologie vorkommen. Die Inhaltsstoffe sind entweder nieder- oder hochmolekulare Bestandteile. Niedermolekulare Bestandteile sind beispielsweise Haptene oder Antigene mit einem Molekulargewicht von weniger als 2.000 D. Hochmolekulare Bestandteile sind insbesondere Biopolymere, insbesondere solche, die aus Aminosäuren oder Nukleotidbausteinen aufgebaut sind. Insbesondere handelt es sich um immunologisch aktiveProteine, wie Antigene und Antikörper, und Nukleinsäuren. Besonders geeignet ist das vorliegende Verfahren.zur Isolierung von Nukleinsäuren.

Grundlage für die Durchführung des erfindungsgemäßen Verfahrens ist die Bereitstellung einer das biologische Material enthaltenden Probenflüssigkeit. Diese ist bevorzugt in einem Probengefäß (A) enthalten, welches eine innere Kontur (A17) aufweist. Diese innere Kontur ist bevorzugt glatt. Ein besonders bevorzugter Fall ist, daß das Probengefäß eine hohlzylindrische Innenform aufweist.

Die Probenflüssigkeit kann entweder in schon für die Bindung des biologischen Materials geeigneter Form in das Probengefäß eingegeben werden, sie kann jedoch auch das Ergebnis von Vorbereitungsschritten einer ursprünglichen Probenflüssigkeit sein. Beispielhaft seien an dieser Stelle zwei alternative Möglichkeiten für die Bereitstellung von nukleinsäurehaltiges Material enthaltenden Probenflüssigkeiten beschrieben. In einer Ausführungsform wird eine ursprüngliche Probenflüssigkeit in einem Aufschlußgefäß zur Freisetzung von Nukleinsäuren aus dieser enthaltenden Zellen mittels eines die Zellwände lysierenden Reagenzes behandelt. Anschließend wird, gewünschtenfalls nach Abtrennung unerwünschter Probenbestandteile, die nukleinsäurehaltige Probenflüssigkeit in das Probengefäß (A) eingefüllt. In einer zweiten Ausführungsform, welche bevorzugt ist, wird die ursprüngliche Probenflüssigkeit in das Probengefäß eingefüllt und erst dann Reagenzien zur Freisetzung der Nukleinsäuren aus den Zellen zugegeben. Auch in diesem Fall liegen die Nukleinsäuren frei in der Probenflüssigkeit vor. Die Reaktionsschritte, die zu einer Bereitstellung des biologischen Materials führen, sind dem Fachmann aus der Fachliteratur bekannt.

Die das biologische Material enthaltende Probenflüssigkeit wird nun im Probengefäß (A) mit dem Formkörper (C) so in Kontakt gebracht, daß Probenflüssigkeit durch die poröse Matrix (C11) in den Formkörper (C) eindringt. Der Formkörper ist hohl, so daß die Probenflüssigkeit in ihn eindringen kann. Bevorzugt hat der Formkörper eine hohlzylindrische Form, wobei das auf das Probengefäß hindeutende Ende durch die poröse Matrix verschlossen ist und das vom Probengefäß wegdeutende Ende Bauelemente zur Befestigung eines Deckels aufweist. Die äußere Form des Formkörpers ist auf die innere Form des Probengefäßes so abgestimmt, daß der Formkörper in das Probengefäß eingebracht werden kann.. Die äußere Kontur des Formkörpers liegt eng an der inneren Kontur des Probengefäßes an, so daß der Formkörper sich wie ein im Probengefäß bewegender Kolben verhält.

Die Matrix (C11) ist porös, so daß die Probenflüssigkeit durch sie hindurchdringen kann. Hierdurch ist es möglich, die poröse Matrix wie einen Filter zu verwenden, um das Eindringen unerwünschter Probenbestandteile in den Formkörper (C) zu vermeiden. Bei den unerwünschten Bestandteilen kann es sich beispielsweise um partikuläre Bestandteile handeln, z. B. Reste von Zellwänden, die bei einer vorangegangenen Lyse der Zellen nicht zerstört wurden, jedoch auch Magnetpartikel, die zur Immobilisierung der Zellen verwendet worden sind. In diesem Fall findet beim Durchtritt der Probenflüssigkeit durch die poröse Matrix eine Abreicherung der Probenflüssigkeit an diesen Bestandteilen statt. Das biologische Material kann in diesem Fall in der Probenflüssigkeit verbleiben. In einer zweiten Funktion kann die poröse Matrix selbst schon zur Bindung des biologischen Materials verwendet werden. Hierzu wird eine Matrix gewählt, die eine Affinität zu dem zu bindenden biologischen Material aufweist. Es ist sowohl eine unspezifische als auch eine spezifische Bindung möglich, je nach gewählter Oberfläche der Matrix. Enthält die Matrix an ihrer Oberfläche beispielsweise Antikörper, so können während des Durchtritts der Probenflüssigkeit durch die Matrix Antigene, gegen die der Antikörper gerichtet ist, an der Matrix gebunden (immobilisiert) werden. Für die Bindung von immunologisch aktiven Stoffen hat sich als poröse Matrix insbesondere Cellulose, z. B. Papier, als günstig erwiesen. Eine Immobilisierung von Nukleinsäuren ist beispielsweise dadurch möglich, daß als Matrix ein Glasfaservlies (sequenzunspezifische Immobilisierung) oder ein poröses Material, an dem eine Nukleinsäure, welche zu der zu bindenden Nukleinsäure komplementär ist, gebunden ist (sequenzspezifische Immobilisierung), verwendet wird.

Bei der porösen Matrix kann es sich um vliesartige Matrizes handeln, aber auch um partikuläre Matrizes, wenn diese wiederum, z. B. durch Filter, so im Formkörper lokalisiert sind, daß die Probenflüssigkeit Gelegenheit hat, in die Poren der partikulären Matrix einzudringen. Im bevorzugten Fall handelt es sich bei der porösen Matrix um eine vliesförmige Matrix. Es kann sich auch um eine aus mehreren Komponenten (z. B. unterschiedlich festen Vliesen) handeln. Die Porosität der Matrix bewirkt ein langsames Durchströmen der Matrix durch die Flüssigkeit, so daß eine Reaktion, z. B. Binding von Inhaltsstoffen der Flüssigkeit an die Matrix, besonders effektiv ist.

Diese Matrix kann auf bekannte Weise in dem Formkörper befestigt werden. Beispielsweise kann sie von der dem Probengefäß abgewandten Seite des Formkörpers in den Formkörper eingefügt und, z. B. mit Hilfe eines Halterings, an der vorbestimmten Position fixiert werden. Für eine weitere Befestigung der Matrix kann diese zusätzlich in dem Formkörper eingeschweißt werden. Bevorzugt wird die Matrix jedoch von der dem Probengefäß zugewandten Seite in den Formkörper eingebracht, bevorzugt bis zu einem vorinstallierten Haltering entlang der Innenwand des Formkörpers und anschließend der überstehende Rand so nach innen umgebördelt, daß die Matrix zwischen Haltering und Bördelkante fixiert ist.

Besonders bevorzugt wird die Matrix auf der dem Probengefäß abgewandten Seite durch einen ringförmig umlaufenden Vorsprung in der inneren Kontur des Formkörpers festgehalten. Ganz besonders bevorzugt ist dieser Vorsprung in der Materialstärke so gewählt, daß er ohne Zerstörung der Matrix und des übrigen Formkörpers abgebrochen werden kann.

Die poröse Matrix ist außerdem besonders bevorzugt komprimierbar. Unter komprimierbar wird im Sinne der Erfindung eine Matrix verstanden, aus welcher bei Ausüben eines Druckes durch Aufdrücken eines stempelförmigen Gerätes sich das äußere Volumen der Matrix verkleinert und darüber hinaus sich die Porengröße verringert, so daß ursprünglich in der Matrix enthaltene Flüssigkeit aus der Matrix herausgedrückt wird.

In einer bevorzugten Ausführungsform wird der Formkörper (C) mit Hilfe eines den Formkörper in Richtung auf die Umgebung aerosoldicht verschließenden Deckels in das Probengefäß (A) eingeführt. Durch aufeinander abgestimmte Konturen wird der Durchtritt der Probenflüssigkeit durch die poröse Matrix in den Innenraum des Formkörpers erzwungen. Hierbei wird das biologische Material an der porösen Matrix gebunden. Danach wird die im Hinblick auf das biologische Material abgereinigte Probenflüssigkeit aus dem Formkörper oder/und dem Probengefäß entfernt. Die Restflüssigkeit wird aus dem Probengefäß (A) abgesaugt und bei diesem Vorgang dringt die in den Formkörper eingedrungene Restflüssigkeit durch die poröse Matrix in das Probengefäß.

Das erfindungsgemäße Verfahren hat besonders für solche biologischen Materialien besondere Vorteile, bei denen ein einmaliger Durchtritt durch die poröse Matrix noch nicht zur vollständigen Bindung der Gesamtmenge des biologischen Materials ausgereicht hat. Es ist nämlich mit der erfindungsgemäßen Konstruktion möglich, durch Zurückziehen des Formkörpers, z. B. in einen Teil des Probengefäßes, der nicht von Probenflüssigkeit angefüllt ist, und erneutes Einbringen in den mit Probenflüssigkeit gefüllten Teil des Probengefäßes, zwei nochmalige Durchtritte der Probenflüssigkeit durch die poröse Matrix zu erreichen. Dies kann die Ausbeute an immobilisiertem biologischem Material erhöhen.

Nach Entfernen der restlichen Probenflüssigkeit aus den Poren der Matrix kann, um eine eventuell erforderliche Entfernung weiterer zurückgebliebener Verunreinigungen zu erreichen, die Matrix mit einer Waschlösung behandelt werden. Dies kann erfindungsgemäß bevorzugt dann geschehen, wenn der Formkörper sich noch in dem Probengefäß befindet. Durch Wahl eines Deckels, welcher sowohl das Probengefäß als auch den Formkörper aerosoldicht verschließt, wird der Eintrag von kontaminierenden Aerosolen in den Formköper reduziert. Um eine besonders zweckmäßige Behandlung des Formkörpers und des Probengefäßes zu erreichen, ist die Kraft zur Lösung des Deckels (B) vom Probengefäß (A) geringer als die Kraft zur Lösung des Deckels (B) von dem Formkörper (C). Dies kann beispielsweise dadurch erreicht werden, daß der Anpreßdruck des Deckels auf die beiden Komponenten unterschiedlich stark ist. Der Anpreßdruck kann durch das Vorsehen von Rastelementen moduliert werden.

Darüber hinaus kann durch Vorsehen von Rastelementen an dem Formkörper (C) und dem Probengefäß (A) erreicht werden, daß der Deckel entfernt werden kann, ohne daß sich der Formkörper aus dem Probengefäß löst.

Sofern das biologische Material in an die poröse Matrix gebundener Form vorliegt, kann es entweder noch in dem Probengefäß (A) oder erst nach Entfernung des Formkörpers (C) aus dem Probengefäß (A) weiter bearbeitet werden. Unter einer Weiterbearbeitung wird insbesondere die Aufhebung der Bindung des biologischen Materials an die poröse Matrix verstanden. Es ist jedoch auch möglich, das biologische Material direkt in an die poröse Matrix gebundener Form nachzuweisen.

Zur Entfernung des Formkörpers (C) aus dem Probengefäß (A) wird bevorzugt ein weiterer, den Formkörper in Richtung auf die Umgebung aerosoldicht verschließender Deckel (B) benutzt, wobei die Kraft zur Lösung des Formkörpers (C) aus dem Probengefäß (A) geringer ist als die Kraft, mit der der Deckel den Formkörper (C) festhält. Der Formkörper kann daraufhin in ein Gefäß (D) eingebracht werden, wo er so befestigt ist, daß er bevorzugt nur unter Zerstörung des Formkörpers (C) oder des Gefäßes (D) oder mit einer Kraft, die größer ist als die Kraft, die zur Lösung des Deckels (B) vom Formkörper (C) erforderlich ist, aus dem Gefäß (D) entfernt werden kann. Im Gefäß (D) können die Reaktionen zur Aufhebung der Bindung des biologischen Materials durchgeführt werden.

Die Reihenfolge der beiden Schritte Bereitstellung der Probenflüssigkeit in dem Probengefäß (A) und des Einbringens eines Formkörpers in das Probengefäß ist prinzipiell vertauschbar. In einer ersten Möglichkeit kann zunächst der Formkörper in das Probengefäß eingebracht werden und daraufhin die Probenflüssigkeit eingefüllt werden. Dies kann sowohl in den Innenraum des Formkörpers als auch in das Probengefäß geschehen. Bevorzugt ist jedoch der Fall, daß die Probenflüssigkeit sich zunächst im Probengefäß befindet und anschließend der Formkörper in das Probengefäß eingeführt wird.

Gegenüber Verfahren, die auf einem Durchsaugen einer Probenflüssigkeit durch eine poröse Matrix, z. B. ein Säulenmaterial, oder auf Zentrifugation der Probenflüssigkeit durch eine poröse Matrix beruhen, hat das erfindungsgemäße Verfahren den Vorteil, daß deutlich weniger Aerosole gebildet werden und Zentrifugation und Absaugschritte sind außerdem recht komplexe Vorgänge. Die Automation der Arbeitsabläufe ist mit dem erfindungsgemäßen Verfahren ebenfalls besser möglich als mit den bekannten Verfahren. Die Möglichkeit, die Probenflüssigkeit mehrmals durch die poröse Matrix fließen zu lassen, stellt ebenfalls einen großen Verfahrensvorteil dar.

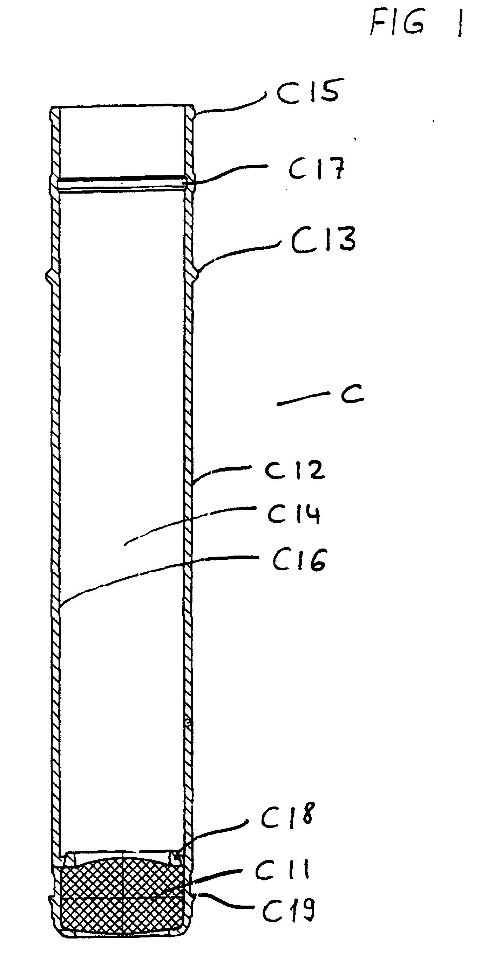

In Figur 1 ist ein Formkörper gezeigt. Es handelt sich hier um ein im wesentlichen hohlzylindrisches Gefäß, welches auf der einem Probengefäß zugewandten Seite eine poröse Matrix (C11) aufweist. Diese wird durch den Haltering (C18) und die Bördelkante im Formkörper fixiert. Darüber hinaus sind die umlaufenden Haltemittel (C15 und C13) zur Befestigung eines Deckels bzw. zur Befestigung des Formkörpers in einem Elutionsgefäß erkennbar. Bevorzugt enthält der Formkörper weiterhin Mittel zur Fixierung weiterer Mittel in seinem Inneren, z. B. eine Einrastkerbe (C17) für die Fixierung eines Stempels. Der Formkörper hat eine Außenkontur (C12) und eine Innenkontur (C16). Der Hohlraum im Inneren des Formkörpers ist mit C14 bezeichnet. Der Haltering (C18) ist hier in einer Form gezeigt, in der er von dem Formkörper durch Vorsehen von Sollbruchstellen entlang der inneren Kontur abbrechbar gestaltet ist. Bei der Matrix (C11) handelt es sich bevorzugt um ein komprimierbares Material, welches mit Hilfe eines in den Formkörper eingeführten Stempels (E) zusammengedrückt werden kann. Die Fixierung der Matrix in komprimierter Form geschieht bevorzugt durch Fixierung des Stempels (E) über geeignete Vorsprünge auf der Außenkontor und Einrasten in die Einkerbung (C17). Der umlaufende Rand (C19) kann als Dichtlippe gegenüber der Innenkontur eines Elutionsgefäßes (D) verwendet werden. Hierdurch wird verhindert, daß eventuell vorgelegte Elutionsflüssigkeit in größerem Umfang zwischen die Außenkontur (C12) des Formkörpers und die Innenkontur des Elutionsgefäßes gerät. Dieselbe Funktion kann die Dichtlippe auch für den möglichst vollständigen Durchtritt der Probenflüssigkeit durch die poröse Matrix (C11) im Hinblick auf die Innenkontur des Probengefäßes (A) erfüllen.

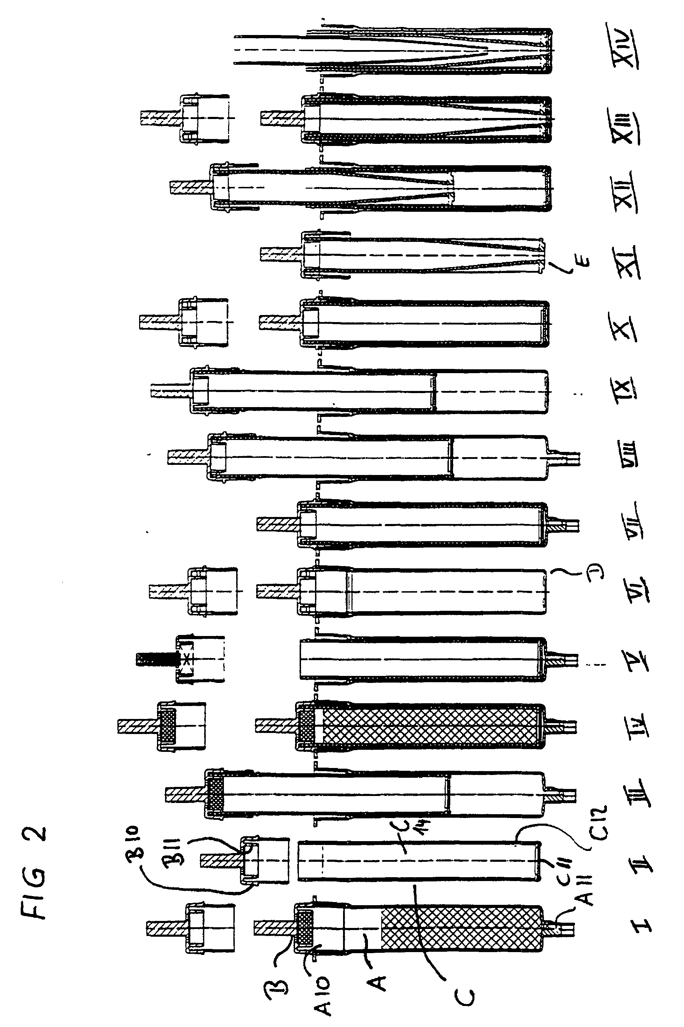

In einer besonderen Ausführungsform des erfindungsgemäßen Verfahrens für die Aufarbeitung nukleinsäurehaltiger Probenlösungen, werden folgende Arbeitsschritte durchgeführt (siehe FIG 2). In einem ersten Schritt (I) wird eine zellhaltige Probenflüssigkeit in einem Probegefäß (A) mit einem Material inkubiert, an welches die Zellen gebunden werden, aus denen Nukleinsäuren gewonnen werden sollen. Hierzu kann dieses Material entweder spezifische Bindeeigenschaften für die Oberfläche der Zellen aufweisen, z. B. durch Immobilisierung von Antikörpern gegen Oberflächenantigene oder ein Absorbermaterial (A16, nicht gezeigt), es kann jedoch auch ein Material mit Filtereigenschaften (A15, nicht gezeigt) vorgesehen sein, durch welches die Zellen zurückgehalten werden, wenn die Flüssigkeit durch das Material durchtritt, z. B. aus dem Probengefäß entfernt wird. Bedingungen für die Immobilisierung von Zellen an Oberflächen sind dem Fachmann bekannt, z. B. aus Methods in Enzymology Vol. 171, Biomembranes / Part R Transport Theory: Cell and Model Membranes, Edited by Sidney Fleischer, Becca Fleischer, Department of Molecular Biology, Vanderbilt University, Nashville, Tennessee.

Während der Inkubation ist das Probengefäß bevorzugt durch einen Deckel (B) verschlossen, um aktiven bzw. passiven Kontaminationsschutz zu gewährleisten.

In einem weiteren Schritt wird die Flüssigkeit aus dem Probengefäß entfernt, während Zellen, deren Nukleinsäuren isoliert werden sollen, in an das Material gebundenem Zustand im Probengefäß zurückbleiben. Sofern es sich bei dem zellbindenden Material um partikuläre Materialien handelt, kann ein Zurückhalten auch dadurch erreicht werden, daß das Material magnetisch ist und ein Magnetfeld von außen an das Probengefäß angelegt wird, welches so stark ist, daß das partikuläre Material im Probengefäß zurückbleibt, wenn die Flüssigkeit entfernt wird. Die Flüssigkeit wird durch eine räumlich von der Einlaßöffnung (A10) getrennte Auslaßöffnung (A11) entfernt. Sofern die Auslaßöffnung im unteren Teil des Probengefäßes und unterhalb der zurückgehaltenen Zellen gelegen ist, kann die Flüssigkeit unter Anlegen eines leichten Vakuums, abgesaugt werden. Hierzu kann beispielsweise an der Auslaßöffnung ein Ventil vorgesehen sein, welches sich durch Anlegen von Unterdruck öffnet.

Zur weitergehenden Entfernung eventuell störender Probenbestandteile von den Zellen können ein oder mehrere Waschschritte vorgesehen werden. Hierzu wird in das Probengefäß eine Waschflüssigkeit eingefüllt, in der sich eventuelle Verunreinigungen lösen, die jedoch die Bindung der Zellen an die Oberfläche des zellbindenden Materials nicht wesentlich beeinträchtigen. Solche Waschlösungen sind dem Fachmann z. B. aus den Zellseparationsprotokollen bzw. aus entsprechenden Reinigungskitsprotokollen für Nukleinsäuren bekannt. Sie richten sich im wesentlichen nach der Art der Bindung der Zellen an das Material.

Nachdem gegebenenfalls die letzte Waschlösung aus dem Probengefäß (A) entfernt wurde, werden die gereinigten, angereicherten Zellen mit einer geeigneten Lyseflüssigkeit zur Freisetzung der Nukleinsäuren aus den Zellen in Kontakt gebracht. Die Reagenzien dieser Lyselösung richten sich weitgehend nach der Art der immobilisierten Zellen. Sofern es sich bei den Zellen um Bakterien handelt, enthält die Lyselösung bevorzugt Proteinase K zum Abbau der Zellwand. Gewünschtenfalls wird die Lyse durch Erhitzen bzw. Abkühlen sowie Mischen der Reaktionsmischung unterstützt. Sofern es sich bei dem zellbindenden Material um magnetische Partikel handelt, kann die Mischung auch mittels Magneten vorgenommen werden. Außerdem ist eine Mischung durch Schütteln des Probengefäßes möglich. Am Ende dieses Aufschlusses liegen die zu isolierenden Nukleinsäuren frei in der Lösung vor.

Auch während der Lyse ist das Reaktionsgefäß bevorzugt durch einen Deckel verschlossen, um Kontaminationen aus der Umgebung zu verhindern. Nach Ende der Lyse wird der Deckel, bevorzugt mit Hilfe einer entsprechenden mechanischen Vorrichtung, entfernt. Danach wird in das Probengefäß, welches eine Mischung von Abbauprodukten der Zellen sowie die Nukleinsäuren enthält, ein Formkörper (C) eingeführt, dessen äußere Kontur (C12) auf die innere Kontur (A17) des Probengefäßes abgestimmt ist. Dieser Formkörper ist hohl und in Richtung auf das Probengefäß und die Reaktionsmischung hin durch einen Filter (C11) verschlossen. Die Einführung des Formkörpers (C) erfolgt bevorzugt mit Hilfe eines Bauelementes (B11) des Deckels (B), der außerdem ein Bauelement (B10) enthält, welches zum Verschluß des Probengefäßes geeignet ist. In diesem Fall wird der Formkörper mit dem Deckel ergriffen (II) und gleichzeitig mit dem Verschluß des Probengefäßes in das Probengefäß eingeführt. Während dieses Vorgangs wird außerdem die Reaktionsmischung durch den Filter (C11) in den Hohlraum (C14) des Formkörpers eindringen (IV). Durch das Vorsehen des Filters können einerseits große Partikel an dem Eintritt in den Hohlraum gehindert werden und andererseits kann, wenn der Filter nukleinsäurebindende Eigenschaften hat, schon während des Durchtritts der Reaktionsmischung eine Bindung der Nukleinsäuren an den Filter erreicht werden. In diesem Fall ist es zweckmäßig, ein glasfaserhaltiges Filtermaterial zu wählen.

In einem nächsten Schritt wird die verbleibende Lysereaktionsmischung aus der durch A und C gebildeten Vorrichtung entfernt, z. B. durch Absaugen durch eine untenliegende Auslaßöffnung (A11) im Probengefäß. Auch die in den Hohlkörper (C14) des Formkörpers eingedrungene Lösung wird somit entfernt, so daß der Filter möglichst keine Flüssigkeitsreste mehr enthält. Danach wird der bisher verwendete Deckel (B) entfernt, wobei der Formkörper (C) zunächst im Probengefäß verbleibt (eingerastet) (V).

Gleichzeitig oder anschließend wird ein Elutionsgefäß (D) zur Aufnahme des Formkörpers (C) vorbereitet. Ein gegebenenfalls auf diesem Gefäß befindlicher Deckel wird entfernt (VI). Bevorzugt wird vor Überführung des Formkörpers (C) in das Elutionsgefäß (D) eine Elutionslösung in das Elutionsgefäß vorgelegt, z. B. einpipettiert. Die Zusammensetzung der Elutionslösung richtet sich nach der Art der Bindung der Nukleinsäuren an das Material im Filter (C). Sie enthält Reagenzien, unter deren Einwirkung die immobilisierten Nukleinsäuren von dem Material eluiert, d. h. gelöst, werden. Der ursprünglich das Elutionsgefäß verschließende Deckel (B) wird auf das Probengefäß (A) mit dem Formkörper (C) aufgesteckt (VII).

Zur Entnahme des Formkörpers (C) aus dem Probengefäß (A) wird der Formkörper (C) mit dem Deckel (B) entfernt (VIII). Die Kombination aus Deckel und Formkörper wird anschließend in das Elutionsgefäß eingeführt (IX). Bevorzugt enthält der Formkörper (C) Mittel (C13, nicht gezeigt) zur Fixierung des Formkörpers im Elutionsgefäß (D), die bewirken, daß der Formkörper nur unter Zerstörung des Formkörpers (C) oder des Gefäßes (D) oder mit einer Kraft, die größer ist als die Kraft die zur Lösung des Deckels (B) vom Formkörper (C) erforderlich ist, aus dem Gefäß (D) entfernt werden kann. Eine Entfernung des Formkörpers aus dem Elutionsgefäß ist nicht beabsichtigt.

Während des Eindringens des Formkörpers (C) in das Elutionsgefäß dringt die vorgelegte Elutionslösung in den Filter (C11) und die löst die immobilisierte Nukleinsäure von der festen Matrix ab. Je nach Menge der vorgelegten Elutionslösung wird entweder nur der Filter mit der Elutionslösung getränkt oder dringt die Elutionslösung mit den wieder gelösten Nukleinsäuren in den Hohlkörper (C14) ein. Damit die Elution der Nukleinsäuren möglichst vollständig verläuft, sollte die Innenkontur des Elutionsgefäßes möglichst dicht an die Außenkontur des Formkörpers angepaßt sein.

In einem folgenden Schritt wird der Deckel (B) von der Kombination aus Formkörper (C) und Elutionsgefäß (D) entfernt (X). Er wird benutzt, um einen Stempel (E) aufzunehmen (XI) und in den Hohlraum des Formkörpers (C) einzuführen (XII).Dieser Deckel greift von innen in den Stempel (E). Der Stempel wird so kräftig gegen den Filter (C11) gepreßt, daß Flüssigkeit aus dem Filter durch eine in der Andrucksfläche befindliche Öffnung in einen Innenraum des Stempels eindringt. Dieser Vorgang ist besonders effektiv, wenn die Andrucksfläche in ihrer äußeren Kontur zumindest in dem Bereich, in dem die Auspressung stattfinden soll, an die innere Kontur des Formkörpers (C) angepaßt ist. Der Stempel (E) kann bevorzugt in dieser Lage, z. B. durch Einrasten, fixiert werden. Da die so gebildete Vorrichtung durch den Deckel relativ gut verschlossen ist, kann die nukleinsäurehaltige Lösung in der Vorrichtung aufbewahrt werden.

Zur Entnahme einer gewünschten Menge an Nukleinsäurelösung kann der Deckel entfernt (XIII) und über eine Öffnung des Innenraums des Stempels die gewünschte Menge entnommen, z. B. in einem Pipettiervorgang (XIV). Anschließend kann der Deckel wieder aufgesetzt werden.

Ebenfalls Gegenstand der Erfindung ist ein hohler Formkörper enthaltend eine zur Bindung eines biologischen Materials fähige poröse Matrix (C11) und Bauelemente (C12, C13) zur Befestigung eines Deckels und eines den Formkörper zumindest teilweise umfassenden Gefäßes (D). Die Bauelemente (C12 und C13) stellen vorzugsweise Rastelemente dar, die das Handling des Formkörpers erhöhen und das Zusammenspiel der einzelnen verwendeten Module erleichtern.

Der Formkörper kann auf einfache Weise durch spritzgußtechnische Verfahren hergestellt werden. Der Grundkörper besteht hierzu bevorzugt aus Kunststoff, wie beispielsweise die Kunststoffe vom Polypropylen-Typ.

In Figur 1 ist ein erfindungsgemäßer Formkörper im Längsschnitt gezeigt.

In Figur 2 ist ein Verfahren zur Isolierung von Nukleinsäuren gezeigt, welches das erfindungsgemäße Verfahren zur Bindung eines biologischen Materials an eine Festphase beinhaltet.

Die Erfindung wird durch die folgenden Beispiele näher erläutert:

**Beispiel 1**

Der beispielhafte Formkörper ist ein zylinderförmiges Kunststoff-Röhrchen (Außendurchmesser = 6,75 mm, Innendurchmesser = 6,0 mm, Höhe = 40,4 mm, Novolen® 1100 UCX, hergestellt durch Spritzguß), dessen obere Einlaßöffnungs-Außenwandung eine Einrastlippe (C15) aufweist zur reversiblen Kopplung eines Deckels mit dem Formkörper. Eine weitere Einrastlippe (C13) befindet sich ca. 6 mm unterhalb der ersten Einrastlippe. Sie wird für die irreversible Fixierung des Formkörpers im Elutionsgefäß (D) benötigt. An der oberen Einlaßöffnung-Innenwandung befindet sich eine Einrastkerbe (C17) zur irreversiblen Fixierung eines Auspreßstempels E im Innenraum des Formkörpers.

Die Auslaßöffnung (= Röhrchen-Boden) wird mit einem Glasfaservlies (Durchmesser = 7,0 mm, Höhe 1,5 bis 3,0 mm) verschlossen.

Das Glasfaservlies wird nach oben über einen, an drei Stellen mit der Innenwandung des Tubes verbundenen abreißbaren Ring (C18) und von unten über eine Bördelkante fixiert. Zur Minimierung des Totvolumens ist der abreißbare, umlaufende Ring vorteilhaft. Er erfüllt folgende Anforderungen: obere Fixierung der ein oder zwei Lagen Glasfaservlies; beim Auspressen des Glasfaservlieses mit dem Auspreßdevice soll er abreißen und somit den Zwischenraum minimieren. An der äußeren Fläche befinden sich Dichtungslippen (C19), welche das Abdichten zwischen Formkörper und Probengefäß (A) bzw. Elutionsgefäß (D) übernehmen.

**Beispiel 2:**

Biologische Materialien / Chemikalien / Devices

| Probenmaterial | Längenstandard II, Fa. Boehringer Mannheim |
|---|---|
| Bindungspuffer | Qiagen AL 1 / AL 2 (4 Teile / 1 Teil), Fa. Qiagen |
| Waschpuffer | Qiagen AW-Puffer, Fa. Qiagen |
| Elutionspuffer | 10 mM Tris-Puffer pH 9,0 |

Probengefäß (A)
Probengefäß-Deckel (B)
Formkörper (C) mit einer porösen Matrix aus Glasvlies (C11)
Elutionsgefäß (D)
Elutionsgefäß-Deckel (E)
Auspreßstempel-Formkörper (F)

Ansatz der Probenlösungen

| Probe: | 200 µl (6 µl Längenstandard II in PBS-Puffer gelöst) |
|---|---|
| Proteinase K: | 25 µl |
| Bindungspuffer: | 200 µl (AL 1 und AL 2-Puffer in Verhältnis 4+1 gemischt) |
| Ethanol: | 210 µl |
| Gesamtvolulmen pro Ansatz | 635 µl |

Durchführung des Beispieles

Probengefäß (A) wird mit 200 µl Probe, 25 µl Proteinase K-Lösung und 200 µl Bindungspuffer gefüllt. Das Probengefäß (A) wird mit dem Probengefäß-Deckel (B) verschlossen. Die Flüssigkeiten werden im geschlossenen Gefäß gemischt. Danach erfolgt die Inkubation bei 70°C/10 min (Aufschluß der Zellen) mit anschließender Abkühlungsphase auf 20°C in 3 min. Das Probengefäß (A) wird geöffnet und es erfolgt eine Zugabe von 210 µl Ethanol. Das Probengefäß (A) wird verschlossen und die Lösung gemischt.

Das Probengefäß (A) wird geöffnet. Der Probengefäß-Deckel (B) holt den Formkörper (C) mit einer porösen Matrix aus der Vorlage. Der Formkörper mit der Glasvlies-Matrix wird durch die Eingangsöffnung in das mit Flüssigkeit gefüllte Probengefäß eingebracht. Die im Probengefäß (A) vorhandene Flüssigkeit durchströmt von unten das Glasvlies während des Einführungsvorganges. Die frei bewegliche Nukleinsäure bindet an der Glasvlies-Matrix. Im nächsten Schritt wird die im Formkörper (C) stehende Flüsisgkeit nach unten abgesaugt. Dabei strömt die Flüssigkeit nochmals durch das Glasvlies und noch nicht gebundene Nukleinsäure wird an die Matrix fixiert.

Die Glasvlies-Matrix wird 2mal mit 500 µl Waschpuffer gereinigt. Die über der Matrix stehende Pufferlösung wird durch das Glasvlies abgesaugt. Anschließend wird die Matrix mit der gereinigten Nukleinsäure bei 50°C/3 min getrocknet. Der Probengefäß-Deckel (B) wird verworfen.

Der Formkörper (C) mit der Nukleinsäure wird mittels Elutionsgefäß-Deckel (E) von dem Probengefäß (D) in einen vorbereiteten Elutionspuffer mit 200 µl Elutionspuffer überführt. Der Elutionspuffer löst die Nukleinsäure von der Glasvlies-Matrix ab. Die Nukleinsäure-Lösung steht teilweise über der Matrix.

Die Matrix im Formkörper wird in einem weiteren Schritt durch das Einführen des Auspreßstempel-Formkörper (F) mit dem Elutionsgefäß-Deckel (E) komprimiert, um das Totvolumen der Nukleinsäure-Lösung zu minimieren.

Nukleinsäure-Ausbeuten

Die Versuche wurden mit zwei verschiedenen Nukleinsäureprobe-Konzentrationen durchgeführt. Folgende Ergebnisse konnten ermittelt werden:

Versuchsreihe 1: Probenkonzentration: 6 µg Nukleinsäure/200µl Elutionslösung

| Versuchs-Nummer | isolierte gebundene Nukleinsäure (µg) | Ausbeute (%) |
|---|---|---|
| Versuch 1 | 1,4 µg | 22,9 |
| Versuch 2 | 1,6 µg | 27,5 |
| Versuch 3 | 1,2 µg | 23,8 |
| Versuch 4 | 1,5 µg | 29,8 |
| Versuch 5 | 1,6 µg | 35,2 |

Versuchsreihe 2: Probenkonzentration: 20 µg Nukleinsäure/200 µl Elutionslösung

| Versuchs-Nummer | isolierte gebundene Nukleinsäure (µg) | Ausbeute (%) |
|---|---|---|
| Versuch 1 | 3,7 µg | 28,0 |
| Versuch 2 | 6,4µg | 38,8 |
| Versuch 3 | 4,8 µg | 40,0 |
| Versuch 4 | 4,1 µg | 30,3 |
| Versuch 5 | 5,1 µg | 37,8 |

**Bezugszeichenliste**

**A Probengefäß**

10  Einlaßöffnung
11  Auslaßöffnung
17  innere Form
19  Außenform
22  Element zur Fixierung von weiteren Funktionselementen

**B Deckel**

10 Bauelement zum Verschließen des Probengefäßes A

11 Bauelement zum Ergreifen des Formkörpers C

**C Formkörper**

11 poröse Matrix

12 äußere Kontur

13 Mittel zur Fixierung des Formkörpers im Elutionsgefäß

14 Hohlkörper

15 Mittel zur Befestigung eines Deckels

16 innere Kontur

17 Mittel zur Fixierung eines Stempels E, umlaufend

18 umlaufender Steg, abbrechbar

19 Rand

**D Elutionsgeräß**

12 Einrastkerbe

**E Stempel**

10 Andrucksfläche

11 Außenkontur

12 Innenraum

13 Öffnungen in der Andrucksfläche

14 Entnahmeöffnung

15 Dichtung

16 Einrastring

17 Aussparung

**Patentansprüche**

1. Verfahren zur Bindung eines biologischen Materials an eine Festphase durch

- Bereitstellung einer das biologische Material enthaltenden Probenflüssigkeit in einem Probengefäß (A) mit einer inneren Kontur (A17) und
- Einbringen eines gegen das Probengefäß mit einer zur Bindung eines biologischen Materials fähigen porösen Matrix (C11) verschlossenen und hohlen Formkörpers (C) in das Probengefäß (A), so daß Probenflüssigkeit durch die poröse Matrix (C 11) in den Formkörper (C) eindringt, wobei die Kontur (C12) des Formkörpers (C) so auf die innere Kontur (A17) des Probengefäßes (A) abgestimmt ist, daß beim Einführen des Formkörpers (C) in das Probengefäß (A) der Durchtritt der Probenflüssigkeit durch die poröse Matrix in den Innenraum des Formkörpers (C) erzwungen wird und das biologische Material an die poröse Matrix binden kann und
- Entfernen der in den Formkörper (C) eingedrungenen Probenflüssigkeit, **dadurch gekennzeichnet, daß** die in dem Formkörper eingedrungene Probenflüssigkeit durch die poröse Matrix (C11) mittels Anlegen eines Vakuums an die Auslaßöffnung (A11) entfernt wird.

2. Verfahren gemäß Anspruch 1, **dadurch gekennzeichnet, daß** der Formkörper (C) anschließend aus dem Probengefäß (A) entfernt wird.

3. Verfahren gemäß Anspruch 1 oder 2, **dadurch gekennzeichnet, daß** das biologische Material eine Nukleinsäure ist.

4. Verfahren gemäß Anspruch 1, **dadurch gekennzeichnet, daß** der Formkörper (C) anschließend in ein Gefäß (D) eingebracht wird, in dem das gebundene biologische Material freigesetzt wird.

5. Verfahren gemäß Anspruch 4, **dadurch gekennzeichnet, daß** das Einbringen des Formkörpers (C) in das Probengefäß (A) mittels eines das Probengefäß (A) und den Formkörper (C) in Richtung auf die Umgebung aerosoldicht verschließenden Deckels (B) vorgenommen wird.

6. Verfahren gemäß Anspruch 5, **dadurch gekennzeichnet, daß** die Kraft zur Lösung des Deckels (B) vom Probengefäß (A) geringer ist als die Kraft zur Lösung des Deckels (B) von dem Formkörper (C).

7. Verfahren gemäß Anspruch 6, **dadurch gekennzeichnet, daß** der Formkörper Mittel (C12) zur Fixierung des Formkörpers (C) in dem Gefäß (D) aufweist, die bewirken, daß der Formkörper nur unter Zerstörung des Formkörpers (C) oder des Gefäßes (D) oder mit einer Kraft, die größer ist als die Kraft, die zur Lösung des Deckels (B) vom Formkörper (C) erforderlich ist, aus dem Gefäß (D) entfernt werden kann.

8. Kombination aus einem hohlem Formkörper (C), enthaltend eine zur Bindung eines biologischen Materials fähige poröse Matrix (C11) und einem Probengefäß (A), wobei die poröse Matrix (C11) den Formkörper gegen das Probengefäß (A) abschliesst und die Kontur (C12) des Formkörpers (C) so auf die innere Kontur (A17) des Probengefäßes (A) abgestimmt ist, daß beim Einführen des Formkörpers (C) in das Probengefäß (A) der Durchtritt der Probenflüssigkeit durch die poröse Matrix in den Innenraum des Formkörpers (C) erzwungen wird, **dadurch gekennzeichnet, daß** das Probengefäß (A) eine Auslaßöffhung (A11) aufweist, die an eine Vakuumeinrichtung angeschlossen ist, die es ermöglicht, die in den Formkörper eingedrungene Probenflüssigkeit durch die poröse Matrix (C11) mittels Anlegen eines Vakuums an die Auslaßöffnung (A11) zu entfernen.

9. Kombination nach Anspruch 8, **dadurch gekennzeichnet, daß** die Matrix (C11) mit Hilfe eines abbrechbaren umlaufenden Steges (C 18) in dem Innenraum (C 14) des Formkörpers fixiert ist.

10. Kombination nach Anspruch 8, **dadurch gekennzeichnet, daß** die Matrix (C11) komprimierbar ist.

**Claims**

1. Method for binding a biological material to a solid phase by

 - providing a sample liquid containing the biological material in a sample vessel (A) having an inner contour (A17) and
 - introducing a hollow shaped body (C) into the sample vessel (A), said hollow body being sealed with respect to the sample vessel by means of a porous matrix (C11) capable of binding a biological material such that sample liquid enters the shaped body (C) through the porous matrix (C11), the contour (C12) of the shaped body (C) matching the inner contour (A17) of the sample vessel (A) in such a manner that sample liquid is forced to pass through the porous matrix into the interior space of the shaped body (C) when the shaped body (C) is inserted into the sample vessel (A) and the biological material can bind to the porous matrix and
 - removing the sample liquid which enters the shaped body (C) **characterized in that** the sample liquid that enters the shaped body through the porous matrix (C11) is removed by applying a vacuum to the outlet opening (A11).

2. Method as claimed in claim 1, **characterized in that** the shaped body (C) is subsequently removed from the sample vessel (A).

3. Method as claimed in claim 1 or 2, **characterized in that** the biological material is a nucleic acid.

4. Method as claimed in claim 1, **characterized in that** the shaped body (C) is subsequently introduced into a vessel (D) in which the bound biological material is released.

5. Method as claimed in claim 4, **characterized in that** the shaped body (C) is introduced into the sample vessel (A) by means of a lid (B) which makes an aerosol-tight seal of the sample vessel (A) and the shaped body (C) towards the environment.

6. Method as claimed in claim 5, **characterized in that** the force required to detach the lid (B) from the sample vessel (A) is less than the force required to detach the lid (B) from the shaped body (C).

7. Method as claimed in claim 6, **characterized in that** the shaped body has means (C12) to fix the shaped body (C) in the vessel (D) which are such that the shaped body can only be removed from the vessel (D) with destruction of the shaped body (C) or of the vessel (D) or by using a force that is larger than the force that is necessary to detach the lid (B) from the shaped body (C).

8. Combination of a hollow shaped body (C) containing a porous matrix (C11) capable of binding a biological material and a sample vessel (A), the porous matrix (C11) sealing the shaped body against the sample vessel (A) and the contour (C12) of the shaped body (C) matching the inner contour (A17) of the sample vessel (A) in such a manner that, sample liquid is forced to pass through the porous matrix into the interior space of the shaped body (C) when the shaped body (C) is inserted into the sample vessel (A) **characterized in that** the sample vessel (A) has an outlet opening (A11) which is attached to a vacuum apparatus which enables sample liquid which enters the shaped body through the porous matrix (C11) to be removed by applying a vacuum to the outlet opening (A11).

9. Combination as claimed in claim 8, **characterized in that** the matrix (C11) is fixed in the interior space (C14) of the shaped body with the aid of a breakable circumferential bar (C18).

10. Combination as claimed in claim 8, **characterized in that** the matrix (C11) is compressible.


**Revendications**

1. Procédé pour lier un matériau biologique sur une phase solide par

   - préparation d'un liquide d'échantillon contenant le matériau biologique dans un récipient d'échantillon (A) présentant un contour interne (A17) et
   - introduction dans le récipient d'échantillon d'un corps moulé (C), fermé par rapport au récipient d'échantillon par une matrice (C11) poreuse apte à une liaison d'un matériau biologique et creux, de telle manière que le liquide d'échantillon pénètre à travers la matrice poreuse (C11) dans le corps moulé (C), le contour (C12) du corps moulé (C) étant adapté au contour interne (A17) du récipient à échantillon (A) de telle manière que lors de l'introduction du corps moulé (C) dans le récipient d'échantillon (A), le passage du liquide d'échantillon à travers la matrice poreuse dans l'espace intérieur du corps moulé (C) est forcé et que le matériau biologique peut se lier à la matrice poreuse et
   - élimination du liquide d'échantillon qui a pénétré dans le corps moulé (C), **caractérisé en ce que** le liquide d'échantillon qui a pénétré dans le corps moulé à travers la matrice poreuse (C11) est éliminé en appliquant un vide au niveau de l'ouverture de sortie (A11).

2. Procédé selon la revendication 1, **caractérisé en ce que** le corps moulé (C) est ensuite éliminé du récipient d'échantillon (A).

3. Procédé selon la revendication 1 ou 2, **caractérisé en ce que** le matériau biologique est un acide nucléique.

4. Procédé selon la revendication 1, **caractérisé en ce que** le corps moulé (C) est ensuite introduit dans un récipient (D) dans lequel le matériau biologique lié est libéré.

5. Procédé selon la revendication 4, **caractérisé en ce que** l'introduction du corps moulé (C) dans le récipient d'échantillon (A) est réalisée au moyen d'un couvercle (B) fermant le récipient d'échantillon (A) et le corps moulé (C) dans le sens vers l'environnement de manière étanche aux aérosols.

6. Procédé selon la revendication 5, **caractérisé en ce que** la force pour libérer le couvercle (B) du récipient d'échantillon (A) est plus faible que la force pour libérer le couvercle (B) du corps moulé (C).

7. Procédé selon la revendication 6, **caractérisé en ce que** le corps moulé présente des moyens (C12) pour fixer le corps moulé (C) dans le récipient (D), qui font que le corps moulé ne peut être éliminé du récipient (D) qu'en dégradant le corps moulé (C) ou le récipient (D) ou par une force qui est supérieure à la force nécessaire pour libérer le couvercle (B) du corps moulé (C).

8. Combinaison d'un corps moulé creux (C) contenant une matrice (C11) poreuse capable de lier un matériau biologique et un récipient d'échantillon (A), la matrice poreuse (C11) fermant le corps moulé par rapport au récipient d'échantillon (A) et le contour (C12) du corps moulé (C) étant adapté de telle manière au contour interne (A17) du récipient d'échantillon (A) que lors de l'introduction du corps moulé (C) dans le récipient d'échantillon (A), on force un passage du liquide d'échantillon à travers la matrice poreuse dans l'espace intérieur du corps moulé (C), **caractérisée en ce que** le récipient d'échantillon (A) présente une ouverture de sortie (A11) qui est raccordée à un dispositif de vide qui permet d'éliminer le liquide d'échantillon qui a pénétré dans le corps moulé à travers la matrice poreuse (C11) en appliquant un vide à l'ouverture de sortie (A11).

9. Combinaison selon la revendication 8, **caractérisée en ce que** la matrice (C11) est fixée à l'aide d'une âme (C18) périphérique pouvant être cassée dans l'espace intérieur (C14) du corps moulé.

10. Combinaison selon la revendication 8, **caractérisée en ce que** la matrice (C11) est compressible.

FIG 1

C15
C17
C13
C
C12
C14
C16
C18
C11
C19

FIG 2